# EUROPÄISCHE PATENTSCHRIFT

(11) **EP 1 198 690 B1**
(45) Veröffentlichungstag und Bekanntmachung des Hinweises auf die Patenterteilung: **13.08.2003**
(21) Anmeldenummer: 00936873.9
(22) Anmeldetag: 08.06.2000
(51) Int. Cl.: F27D 13/00, C21C 5/56

(54) **VORWÄRMEINRICHTUNG**
PRE-HEATING DEVICE
DISPOSITIF DE PRECHAUFFAGE

(30) Priorität: 08.06.1999 DE 19926059
(43) Veröffentlichungstag der Anmeldung: 24.04.2002
(73) Patentinhaber: SMS SCHLOEMANN-SIEMAG AKTIENGESELLSCHAFT, 40237 Düsseldorf (DE)
(72) Erfinder: DEPPNER, Karl-Heinz, D-46562 Voerde (DE); PASKARBEIT, Edgar, D-46145 Oberhausen (DE); SCHNEIDER, Karl-Josef, D-46514 Schermbeck (DE)
(74) Vertreter: Valentin, Ekkehard, Dipl.-Ing.
(86) Internationale Anmeldenummer: EP0005317
(87) Internationale Veröffentlichungsnummer: WO00075589

(56) Entgegenhaltungen:
- EP-A- 0 247 923
- EP-A- 0 571 732
- EP-A- 0 646 758
- EP-A- 0 890 809
- WO-A-99/28513
- DE-A- 3 227 824
- GB-A- 940 589
- US-A- 4 389 043
- PATENT ABSTRACTS OF JAPAN vol. 1998, no. 06, 30. April 1998 (1998-04-30) & JP 10 054675 A (DAIDO STEEL CO LTD), 24. Februar 1998 (1998-02-24)

## Beschreibung

Die Erfindung betrifft Vorwärmeinrichtung zum Vorwärmen von Chargiergut, insbesondere Schrott, eines metallurgischen Schmelzaggregats umfassend ein Gehäuse mit einer Gehäusewand, mit einer Öffnung zur Materialzufuhr an seinem oberen Ende, die mit einem Verschlußelement verschließbar ist, und einer Auswurföffnung an seinem unteren Ende, die mit dem metallurgischen Schmelzaggregat in Verbindung steht, mit einer als Schubvorrichtung ausgebildeten Materialfördereinrichtung sowie mit Mitteln zum Leiten heißer Ofengase durch die Vorwärmeinrichtung.

Metallurgische Einschmelzaggregate finden üblicherweise Verwendung zum Einschmelzen von Schrott sowie weiteren Eisenträgem zur Herstellung einer Eisenschmelze und anschließenden Weiterverarbeitung von Stahl. Herkömmliche Verfahren zur Beschickung des Elektroofens erfolgen nach Abschwenken des Ofendeckels durch mit Schrott gefüllte Chargierkörbe. Zur Energieeinsparung und Verkürzung der Einschmelzzeiten ist es bekannt, das einzuschmelzende Gut vorzuwärmen. Hierzu werden Vorwärmeinrichtungen eingesetzt, die die beim Schmelzprozeß entstehenden Ofengase für den Aufwärmprozeß des Chargierguts nutzen.

Eine solche Vorwärmeinrichtung ist in der europäischen Veröffentlichungsschrift EP 0 646 758 A1 beschrieben. Die Vorwärmeinrichtung setzt sich aus einem Gehäuse mit einer Öffnung zur Materialzufuhr an seinem oberen Ende, die mit einem Verschlußelement verschließbar ist, und einer Auswurföffnung an seinem unteren Ende, die mit dem metallurgischen Schmelzaggregat verbunden ist, zusammen. Das Gehäuse selbst umfaßt mindestens einen Durchlaßbereich, dessen eines Ende in Richtung Ofen zeigt und an seinem anderen Ende mit einem Wärmeaustauschbereich verbunden ist. Der Durchlaßbereich ist durch schräg ausgebildete Gehäusewände ausgebildet. Durch ein insgesamt treppenartig ausgebildetes Gehäuse werden mehrere Durchlaß- bzw. Haltebereiche für das vorzuwärmende Material gebildet. Mittels Schubeinrichtungen, die entlang der Gehäusewand bewegt werden, wird das Material in tiefere Bereiche gefördert.

Ausgehend von einem derartigen Stand der Technik ist es Aufgabe der vorliegenden Erfindung, eine Vorwärmeinrichtung mit einer einfachen Bauform zu schaffen, wobei eine Brückenbildung in dem im Gehäuse befindlichen Chargiergut verhindert und ein einfaches Austauschen der Bodenplatte(n) ermöglicht werden soll.

Diese Aufgabe wird mittels einer Vorwärmeinrichtung mit den Merkmalen des Anspruchs 1 gelöst. Vorteilhafte Ausgestaltungen sind in den Unteransprüchen offenbart.

Grundgedanke der Erfindung ist es, daß das Gehäuse der Vorwärmeinrichtung mindestens eine Bodenplatte aufweist, die an der Gehäusewand befestigt ist und deren innenseitiges Ende sich in den Innenraum des Gehäuses so weit erstreckt, daß ein Fallschacht zwischen diesem Ende und der gegenüberliegenden Gehäusewand verbleibt. Unmittelbar oberhalb jeder Bodenplatte ist eine Materialfördereinrichtung als Schubvorrichtung vorgesehen, deren Antriebsmittel und Schubelement sich vorzugsweise im ausgefahrenen Zustand außerhalb des Gehäuses befinden und deren Schubelement längs der Bodenplatte verschiebbar ist, um das zugeführte Material, das von der Bodenplatte im Gehäuseschacht gehalten wird und durch heiße Ofengasströme erwärmt wird, in den Fallschacht zu befördern. Indem vorgeschlagen wird, daß jede Bodenplatte durch eine Öffnung in der Gehäusewand verschiebbar ist und durch die Verschiebebewegung aus dem Gehäuse selbst herausfahrbar ist, sind diese Verschleißteile auf einfache Weise und mit geringem Zeitaufwand auszutauschen. Während des eigentlichen Vorwärmprozesses werden die Bodenplatten nicht bewegt. Nur im Falle von Brückenbildung der Materialsäule ist ein ein Herausfahren der Bodenplatte zweckmäßig. Die Mittel zum Herausfahren der Bodenplatten sind außerhalb der Gehäusewand angeordnet. Insgesamt wird durch die Merkmale der Bodenplatten sowie deren Anordnung und die Anordnung der Schubvorrichtung eine Vorwärmeinrichtung erreicht, die eine baulich einfache Konstruktion zeigt mit guten Instandhaltungseigenschaften, da sich sämtliche bewegliche Komponenten außerhalb des Materialstroms befinden. Insgesamt erlaubt die vorgeschlagene Vorwärmeinrichtung einen kontinuierlichen Schmelzprozeß im Schmelzaggregat, wobei beliebige Mengen an Material durch heiße Ofenabgase aufgeheizt und dem geschlossenen Ofen zugeführt werden.

Eine bevorzugte Ausführungsform der Vorwärmeinrichtung ist mit zwei Bodenplatten vorgesehen, die versetzt zueinander gegenüberliegend an der Gehäusewand angeordnet sind, wobei jeder Bodenplatte eine Schubvorrichtung zugeordnet ist.

Mittels der in das Gehäuse hineinragenden Bodenplatten sind baulich einfache Vorrichtungselemente zum Halten einer Materialcharge vorgesehen. Die Schubvorrichtungen, die sich aus Antriebsmitteln und einem Schubelement zusammensetzen, befinden sich im ausgefahrenen Zustand vollständig außerhalb der Gehäusewand und sind somit vor heißen Ofengasen geschützt. Zur Förderung des Materials in den Fallschacht bewegt sich nur das Schubelement entlang der Bodenplatte und damit im heißen Ofenstrom.

Das Gehäuse weist Rohrstutzen auf zur Verbindung mit Leitungen zum Ein- und Ausfördern von heißem Gas, das beim Schmelzprozeß frei wird. Die Einleitung des Gases ist sowohl in Richtung des Materialstroms des Chargiergutes als auch entgegengesetzt zu diesem möglich.

Aufgrund der einfachen Bauweise kann die Vorwärmeinrichtung oberhalb oder benachbart zum Schmelzaggregat angeordnet sein. Falls sich die Vorwärmeinrichtung oberhalb des Schmelzaggregats befindet, muß gewährleistet sein, daß sich der durch die unterste Bodenplatte gebildete Fallschacht oberhalb der Öffnung im Deckel des Schmelzaggregats befindet. Bei Anordnung neben dem Schmelzaggregat kann die Zuführung des vorgewärmten Materials mittels einer Fördereinrichtung erfolgen, die in eine seitliche Öffnung des Schmelzaggregats eintritt, oder durch eine Fördereinrichtung, die in die Öffnung im Deckel des Schmelzaggregats eintritt. Bei dieser Anordnung ist zudem eine Beschickung des Schmelzaggregats nach herkömmlicher Art mittels eines Chargierkorbes nach Abschwenken des Deckels möglich.

Das Verschlußorgan des Gehäuses ist vorzugsweise als Schleuse ausgebildet, um zu verhindern, daß beim Chargieren heiße Ofengase austreten. Die Schleuse besteht entweder aus zwei Absperrelementen oder aus einer Kombination von zwei oder mehreren Kammern, wobei während des Chargierens von kaltem Schrott etc. jeweils ein Absperrelement bzw. eine Kammer geöffnet ist, während das zweite Absperrelement bzw. die zweite Kammer für einen gasdichten Verschluß der Vorwärmeinrichtung gegenüber der Atmosphäre sorgt.

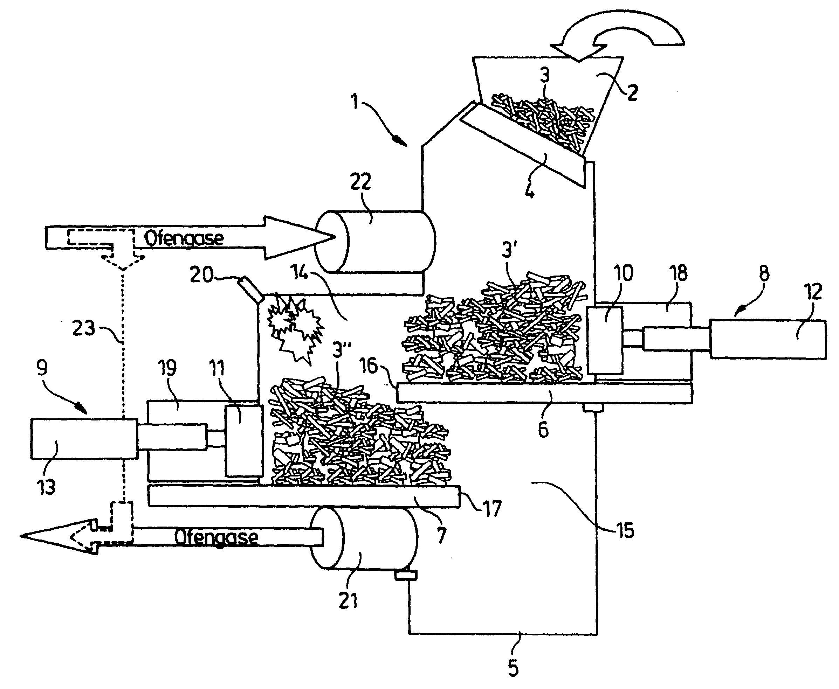

Weitere Einzelheiten und Vorteile der Erfindung ergeben sich aus den Ansprüchen und der nachfolgenden Beschreibung. Hierbei zeigt die einzige Figur einen Querschnitt einer Ausführungsform einer erfindungsgemäßen Vorwärmeinrichtung.

Die Vorwärmeinrichtung besteht aus einem Gehäuse 1, das an seinem oberen Ende mit einer Öffnung 2 zur Materialzufuhr (mit einem Pfeil angedeutet) versehen ist. Als Material 3 kommt insbesondere Schrott, aber auch andere Eisenträger in Frage. Die Öffnung 2 ist zur besseren Speicherung von Material trichterförmig verlängert. Um einen dichten Abschluß zu gewährleisten, ist das Verschlußmittel der Öffnung als Schleuse 4 ausgebildet. Das untere Ende des Gehäuses 1 weist eine Auswurföffnung 5 auf. Diese ist entweder unmittelbar mit der Öffnung eines Elektrolichtbogenofens (nicht gezeigt) verbunden oder mit einer Materialfördereinrichtung (nicht gezeigt), die das vorgewärmte Material in den Elektroofen transportiert. Es sind Bodenplatten 6, 7 vorgesehen, die an der Gehäusewand vertikal verschiebbar befestigt sind. Die Verschiebemittel (nicht gezeigt) sind außerhalb der Gehäusewand angeordnet. Die Bodenplatten 6, 7 sind kühlbar ausgebildet. Hierzu sind beispielsweise Kühlschlangen (nicht gezeigt) integriert, die von einem Kühlmedium durchflossen werden. Unmittelbar oberhalb der Bodenplatten 6, 7 sind Schubvorrichtungen 8, 9 angeordnet. Diese setzten sich aus den eigentlichen Schubelementen 10, 11 sowie Antriebsmitteln 12, 13, beispielsweise hydraulisch oder elektrisch angetriebene, zusammen. Die Schubelemente 10, 11 sind längs der Bodenplatten 6, 7 verfahrbar. Die von den Bodenplatten 6, 7 jeweils gehaltene Materialsäule 3', 3" wird in den Fallschacht 14 bzw. 15 verschoben, der zwischen der gegenüberliegenden Gehäusewand und dem Ende 16, 17 der jeweiligen Bodenplatte 6 bzw. 7 ausgebildet ist. Von dem ersten Fallschacht 14 fällt das Material 3' auf die zweite Bodenplatte 7. Von dieser wird es mittels einer zweiten Schubvorrichtung 9 in den zweiten Fallschacht 15 bzw. die Auswurföffnung 5 transportiert.

Die Antriebsmittel 12, 13 der beiden Schubvorrichtungen 8, 9 befinden sich stets außerhalb der Gehäusewand. Das Gehäuse weist kammerartige Vorsprünge 18, 19 auf, die das jeweilige Schubelement 10, 11 im eingefahrenen Zustand aufnehmen und es so vor dem Angriff der heißen Ofengase schützt.

Oberhalb des ersten Fallschachtes 14 ist eine Brennereinrichtung 20 vorgesehen. Durch Verbrennen der flüchtigen Bestandteile des Einsatzmaterials sowie durch Nachverbrennung der Ofengase ist eine zusätzliche Beheizung möglich. Zudem ist ein weiteres Erwärmen durch das Einbringen von zusätzlichen Energieträgern, wie Gas, Öl oder Kohle erreichbar. Hierzu werde Sauerstoff und/oder Luft und ggf. Gas, Öl oder Kohle mittels Düsen in die Vorwärmeinrichtung eingeleitet.

Das Gehäuse 1 ist jeweils unterhalb der Schleuse 4 und oberhalb der Auswurföffnung 5 mit Rohrstutzen 21, 22 versehen. Diese bilden die Verbindungsstellen für Rohrleitungen (nicht gezeigt) zum Ab- und Antransport heißer Ofengase aus dem Elektroofen. Bei der gezeigten Ausführungsform verläuft der Ofengasstrom parallel zum Materialstrom (vgl. Pfeilrichtungen). Der Strömungsprozeß für die Ofengase kann mittels einer Bypassleitung 23 unterbrochen werden. Über diesen Bypass 23 werden die Ofengase an dem Gehäuse 1 vorbei geleitet, wenn eine direkte Beschickung des Elektroofens mit Chargiergut ohne Verweilzeit in der Vorwärmeinrichtung erwünscht ist. In einem solchen Fall sind die Bodenplatten 6, 7 sowie die Schubvorrichtungen 8, 9 aus dem Gehäuse 1 herausgefahren.

Die Chargierung der Vorwärmeinrichtung sowie des Elektroofens erfolgt diskontinuierlich, vorzugsweise kontinuierlich. Die vorgeschlagene Vorwärmeinrichtung eignet sich sowohl für Drehstrom-Lichtbogenöfen als auch für Gleichstrom-Lichtbogenöfen. Sie eignet sich zudem für den Einbau in neue Anlagen als auch wegen der platzsparenden und leichten Baukonstruktion bevorzugt zur Umrüstung alter Anlagen.

## Patentansprüche

1. Vorwärmeinrichtung zum Vorwärmen von Chargiergut, insbesondere Schrott, eines metallurgischen Schmelzaggregats umfassend ein Gehäuse mit einer Gehäusewand,
mit einer Öffnung zur Materialzufuhr an seinem oberen Ende, die mit einem Verschlußelement verschließbar ist, und einer Auswurföffnung an seinem unteren Ende, die mit dem metallurgischen Schmelzaggregat in Verbindung steht, mit einer als Schubvorrichtung ausgebildeten Materialfördereinrichtung sowie mit Mitteln zum Leiten heißer Ofengase durch die Vorwärmeinrichtung,
**dadurch gekennzeichnet,**
**daß** mindestens eine Bodenplatte (6, 7) vorgesehen ist, die an der Gehäusewand befestigt ist und deren innenseitiges Ende (16, 17) sich in den Innenraum des Gehäuses, weg von der Gehäusewand, so weit erstreckt, daß ein Fallschacht (14, 15) zwischen diesem Ende und der gegenüberliegenden Gehäusewand verbleibt, wobei sowohl die Oberseite als auch die Unterseite der jeweiligen Bodenplatte (6, 7) den heißen Gasen ausgesetzt sind,
**daß** unmittelbar oberhalb jeder Bodenplatte (6, 7) die Schubvorrichtung (8, 9) zur Materialförderung vorgesehen ist, deren Schubelement längs jeder Bodenplatte verschiebbar ist, um das zugeführte Material (3', 3"), das von der Bodenplatte (6, 7) im Gehäuseschacht gehalten wird und durch heiße Ofengasströme erwärmt wird, in den jeweiligen Fallschacht (14, 15) zu befördern, und
**daß** jede Bodenplatte (6, 7) durch eine Öffnung in der Gehäusewand verschiebbar ist und durch eine Verschiebebewegung aus dem Gehäuse herausfahrbar ist.

2. Vorwärmeinrichtung nach Anspruch 1,
**dadurch gekennzeichnet,**
**daß** sich sowohl die Antriebsmittel (12, 13) als auch das Schubelement (10, 11) der Schubvorrichtung (8, 9) im ausgefahrenen Zustand außerhalb des Gehäuses befinden.

3. Vorwärmeinrichtung nach Anspruch 1,
**dadurch gekennzeichnet,**
**daß** zwei oder mehr Bodenplatten (6, 7) vorgesehen sind, die versetzt zueinander gegenüberliegend an der Gehäusewand angeordnet sind, daß jeder Bodenplatte eine Schubvorrichtung (8, 9) zugeordnet ist, und daß der letzte Fallschacht (15) unmittelbar oberhalb der Auswurföffnung (5) angeordnet ist.

4. Vorwärmeinrichtung nach Anspruch 1 oder 3,
**dadurch gekennzeichnet,**
**daß** jede Bodenplatte (6, 7) kühlbar ist

5. Vorwärmeinrichtung nach den Ansprüchen 1 bis 4,
**dadurch gekennzeichnet,**
**daß** jede Bodenplatte rechtwinklig zur Gehäusewand oder im spitzen Winkel nach unten geneigt angeordnet ist.

6. Vorwärmvorrichtung nach Anspruch 1,
**dadurch gekennzeichnet,**
**daß** die Mittel zum Leiten heißer Ofengase in die Vorwärmeinrichtung einen ersten Rohranschlußstutzen (22) umfassen, der an der Gehäusewand zwischen der Materialzufuhröffnung (3) und der ersten Bodenplatte (6) angeordnet ist, und einen zweiten Rohranschlußstutzen (21), der unterhalb der letzten Bodenplatte (7) angeordnet ist, wobei jeweils einer der beiden Stutzen mit einem Auslaßrohr aus dem Schmelzaggregat verbunden ist und wobei die Ofengase in oder entgegengesetzt zur Richtung der Materialbewegung strömen.

7. Vorwärmeinrichtung nach Anspruch 1,
**dadurch gekennzeichnet,**
**daß** das Gehäuse zusätzliche Brennereinrichtungen (20) aufweist, die oberhalb oder seitlich der sich oberhalb der Bodenplatten bildenden Materialsäulen angeordnet sind.

8. Vormrärmeinrichtung nach Anspruch 6,
**dadurch gekennzeichnet,**
**daß** parallel zwischen der Leitung zum Einleiten von heißem Gas und der Leitung zum Ausführen von heißem Gas eine Bypassleitung (23) besteht, um ein Durchströmen des Gehäuses mit heißem Gas wahlweise zu unterbinden.

9. Vorwärmeinrichtung nach Anspruch 1,
**dadurch gekennzeichnet,**
**daß** die Auswurföffnung (5) unmittelbar oberhalb des Schmelzaggregates angeordnet ist oder oberhalb einer Materialfördereinrichtung, die das vorgewärmte Material in ein Schmelzaggregat transportiert.

## Claims

1. A pre-heating device for pre-heating charging stock, in particular scrap of a metallurgical smelting aggregate, comprising
a housing with a housing wall,
with an opening for supplying material at its upper end, said opening being closable with a closure element, and an ejection opening at its lower end, which is in connection with the metallurgical smelting aggregate, having a material conveying device designed as a pushing device as well as having means for conducting hot furnace gases through the pre-heating device,
**characterized in that**
at least one bottom plate (6, 7) is provided, this plate being attached to the housing wall and its inside end (16, 17) extending in the interior space of the housing, away from the housing wall, to the extent that a drop chute (14, 15) remains between this end and the opposite housing wall, whereby both the top side and the bottom side of the respective bottom plate (6, 7) are exposed to the hot gases,
directly above each bottom plate (6, 7), the pushing device (8, 9) is provided for conveying material, its pushing element being displaceable along each bottom plate in order to convey the feed material (3', 3"), which is held by the bottom plate (6, 7) in the housing chute and is heated by hot furnace gas streams, into the respective drop chute (14, 15), and
each bottom plate (6, 7) can be shifted through an opening in the housing wall and can be extracted out of the housing by a displacement movement.

2. The pre-heating device according to Claim 1,
**characterized in that**
both the driving means (12, 13) and the pushing element (10, 11) of the pushing device (8, 9) are outside of the housing in the extracted condition.

3. The pre-heating device according to Claim 1,
**characterized in that**
two or more bottom plates (6, 7) are provided and are arranged offset and opposite one another on the housing wall; each bottom plate is assigned a pushing device (8, 9); and the last drop chute (15) is arranged directly above the ejection opening (5).

4. The pre-heating device according to Claim 1 or 3,
**characterized in that**
each bottom plate (6, 7) is coolable.

5. The pre-heating device according to Claims 1 through 4,
**characterized in that**
each bottom plate is arranged at a right angle to the housing wall or is inclined downward at an acute angle.

6. The pre-heating device according to Claim 1,
**characterized in that**
the means for conducting hot furnace gases into the preheating device comprise a first pipe connection (22) which is arranged on the housing wall between the material feed opening (3) and the first bottom plate (6), and a second pipe connection (21) which is arranged beneath the last bottom plate (7), whereby one of the two connections is connected to an outlet pipe out of the smelting aggregate and the furnace gases flow in the direction of movement of material or in the opposite direction.

7. The pre-heating device according to Claim 1,
**characterized in that**
the housing has additional burner devices (20) which are arranged above or at the side of the material columns forming above the bottom plates.

8. The pre-heating device according to Claim 6,
**characterized in that**
there is a bypass line (23) running parallel to the line for introducing hot gas and the line for removing hot gas to allow optional suppression of the hot gasses flowing through the housing.

9. The pre-heating device according to Claim 1,
**characterized in that**
the ejection opening (5) is arranged directly above the smelting aggregate or above a material conveying device which transports the pre-heated material into a smelting aggregate.

## Revendications

1. Dispositif de préchauffage pour le préchauffage de matériaux de chargement, en particulier de ferraille, d'un agrégat de fusion métallurgique comprenant
une carcasse avec une paroi de carcasse,
avec une ouverture pour l'alimentation en matériaux sur son extrémité supérieure laquelle est fermable à l'aide d'un élément de fermeture, et une ouverture d'éjection sur son extrémité inférieure en relation avec l'agrégat de fusion métallurgique, avec un dispositif d'acheminement des matériaux développé en tant que dispositif de poussée, ainsi qu'avec des moyens pour la conduction de gaz de four chauds à travers le dispositif de préchauffage,
**caractérisé en ce**
**qu'**au moins une plaque de fond (6, 7) est prévue, laquelle est fixée sur la paroi de la carcasse, et dont l'extrémité du côté intérieur (16, 17) s'étend si loin dans l'espace intérieur de la carcasse en s'éloignant de la paroi de la carcasse, qu'un fût de puits vertical (14, 15) demeure entre cette extrémité et la paroi de carcasse située en face, moyennant quoi la face supérieure tout comme la face inférieure des plaques de fond (6, 7) respectives sont exposées aux gaz chauds,
en ce que directement au-dessus de chaque plaque de fond (6, 7) le dispositif de poussée (8, 9) est prévu pour l'acheminement du matériau, dont l'élément de poussée peut être coulissé le long de chaque plaque de fond afin de faire parvenir le matériau (3', 3") acheminé, lequel est maintenu dans le puits de la carcasse par la plaque de fonds (6, 7) et qui est échauffé par des courants chauds de gaz de four, dans le fût de puits vertical (14, 15) respectif, et
en ce que chaque plaque de fonds (6, 7) peut être déplacée via une ouverture dans la paroi de la carcasse et peut être sortie de la carcasse via un mouvement de déplacement.

2. Dispositif de préchauffage selon la revendication 1,
**caractérisé en ce que**
les moyens de propulsion (12, 13) tout comme l'élément de poussée (10,11) du dispositif de poussée (8, 9) se trouvent en-dehors de la carcasse, à l'état sorti.

3. Dispositif de préchauffage selon la revendication 1,
**caractérisé en ce que**
deux ou plusieurs plaques de fond (6, 7) sont prévues, lesquelles sont aménagées en déport l'une par rapport à l'autre et en vis à vis sur la paroi de la carcasse, **en ce qu'**à chaque plaque de fond un dispositif de poussée (8, 9) est affecté, et **en ce que** le dernier fût de puits vertical (15) est aménagé directement au-dessus de l'ouverture d'éjection (5).

4. Dispositif de préchauffage selon l'une quelconque des revendications 1 ou 3,
**caractérisé en ce que**
chaque plaque de fond (6, 7) peut être refroidie.

5. Dispositif de préchauffage selon l'une quelconque des revendications 1 à 4,
**caractérisé en ce que**
chaque plaque de fond est aménagée en angle droit par rapport à la paroi de la carcasse ou penchée vers le bas en angle aigu.

6. Dispositif de préchauffage selon la revendication 1,
**caractérisé en ce que**
les moyens pour la conduction de gaz de four chauds dans le dispositif de préchauffage comprennent une première rallonge de raccord de tuyau (22) disposée sur la paroi de la carcasse entre l'ouverture d'acheminement du matériau (3) et la première plaque de fond (6), et une deuxième rallonge de raccord de tuyau (21) disposée en-dessous de la dernière plaque de fond (7), moyennant quoi respectivement une des deux rallonge est reliée avec un tuyau de sortie de l'agrégat de fusion, et moyennant quoi les gaz de four affluent dans le sens ou contrairement au sens de la direction de déplacement du matériau.

7. Dispositif de préchauffage selon la revendication 1,
**caractérisé en ce que**
la carcasse présente des dispositifs de brûleurs (20) additionnels aménagés au-dessus ou sur le côté des colonnes de matériaux se formant au-dessus des plaques de fond.

8. Dispositif de préchauffage selon la revendication 6,
**caractérisé en ce que**
parallèlement entre la conduite pour l'introduction de gaz chaud et la conduite pour l'évacuation de gaz chaud se trouve une conduite de dérivation (23) afin d'empêcher en option un passage de gaz chaud à travers la carcasse.

9. Dispositif de préchauffage selon la revendication 1,
**caractérisé en ce que**
l'ouverture d'éjection (5) est aménagée directement au-dessus de l'agrégat de fusion ou au-dessus d'un dispositif d'acheminement des matériaux qui transporte le matériau préchauffé dans un agrégat de fusion.
